# EUROPEAN PATENT APPLICATION

(11) **EP 3 276 440 A1**
(43) Date of publication of application: **31.01.2018**
(21) Application number: 17182957.5
(22) Date of filing: 25.07.2017
(51) Int. Cl.: G05D 1/00, G05D 1/10

(54) **SENSE AND AVOID MANEUVERING**

(30) Priority: 29.07.2016 US 201615223541
(71) Applicant: GE Aviation Systems LLC, Grand Rapids, MI 49512-1991 (US)
(72) Inventor: YEH, Kevin, Grand Rapids, MI 49512-1991 (US)
(74) Representative: Williams, Andrew Richard

(57) **Abstract**

Systems and methods 400 for navigating an unmanned aerial vehicle 100 are provided. The method 400 includes detecting 402 a possible obstacle. The method includes determining 404 a predicted path for the possible obstacle. The method includes determining 406 that the possible obstacle will cause a collision with the unmanned aerial vehicle 100 based on the predicted path. The method includes determining 408 when the possible obstacle is cooperative. The method includes controlling 410 the unmanned aerial vehicle 100 to perform an avoidance maneuver when the possible obstacle is not cooperative. The method includes determining 412 whether to initiate communications with the possible obstacle when the possible obstacle is cooperative.

## Description

### FIELD

The present subject matter relates generally to unmanned aerial vehicles.

### BACKGROUND

Unmanned aerial vehicles are increasingly used for a variety of purposes. An unmanned aerial vehicle can use a flight management system that controls a flight path of the unmanned aerial vehicle without requiring a person to be physically present on the aerial vehicle to fly the aerial vehicle. An unmanned aerial vehicle can be controlled to follow a flight path. Obstacles can obstruct the flight path. In a manned aerial vehicle, a pilot can deviate from a flight path to avoid the obstacles. However, in an unmanned aerial vehicle, a pilot may not be available to aid in avoiding the obstacles.

### BRIEF DESCRIPTION

Aspects and advantages of the present disclosure will be set forth in part in the following description, or may be learned from the description, or may be learned through practice of the examples disclosed herein.

One example aspect of the present disclosure is directed to a method for navigating an unmanned aerial vehicle. The method includes detecting a possible obstacle. The method includes determining a predicted path for the possible obstacle. The method includes determining that the possible obstacle will cause a collision with the unmanned aerial vehicle based on the predicted path. The method includes determining when the possible obstacle is cooperative. The method includes controlling the unmanned aerial vehicle to perform an avoidance maneuver when the possible obstacle is not cooperative. The method includes determining whether to initiate communications with the possible obstacle when the possible obstacle is cooperative.

Another example aspect of the present disclosure is directed to a flight management system for navigating an unmanned aerial vehicle. The flight management system includes one or more processors and one or more memory devices included with the unmanned aerial vehicle. The one or more memory devices store instructions that when executed by the one or more processors cause the one or more processors to perform operations. The operations include detecting a possible obstacle. The operations include determining a predicted path for the possible obstacle. The operations include determining that the possible obstacle will cause a collision with the unmanned aerial vehicle based on the predicted path. The operations include controlling the unmanned aerial vehicle to perform an avoidance maneuver when the possible obstacle is not detected via the one or more cooperative sensors. The operations include determining whether to initiate communications when the possible obstacle is detected via the one or more cooperative sensors.

Another example aspect of the present disclosure is directed to an unmanned aerial vehicle. The unmanned aerial vehicle includes one or more cooperative sensors. The unmanned aerial vehicle includes one or more non-cooperative sensors. The unmanned aerial vehicle includes a computing system comprising one or more processors and one or more memory devices located on the unmanned aerial vehicle. The one or more memory devices storing instructions that when executed by the one or more processors cause the one or more processors to perform operations. The operations include detecting a possible obstacle. The operations include determining a predicted path for the possible obstacle. The operations include determining that the possible obstacle will cause a collision with the unmanned aerial vehicle based on the predicted path. The operations include controlling the unmanned aerial vehicle to perform an avoidance maneuver, when the possible obstacle is not detected via the one or more cooperative sensors. The operations include initiating communications with the possible obstacle, when the possible obstacle is detected via the one or more cooperative sensors.

Other example aspects of the present disclosure are directed to systems, methods, aircrafts, avionics systems, devices, non-transitory computer-readable media for navigating an unmanned aerial vehicle. Variations and modifications can be made to these example aspects of the present disclosure.

These and other features, aspects and advantages of various examples will become better understood with reference to the following description and appended claims. The accompanying drawings, which are incorporated in and constitute a part of this specification, illustrate aspects of the present disclosure and, together with the description, serve to explain the related principles.

### BRIEF DESCRIPTION OF THE DRAWINGS

Detailed discussion of embodiments directed to one of ordinary skill in the art are set forth in the specification, which makes reference to the appended figures, in which:
FIG. 1 depicts an unmanned aerial vehicle including an example sense and avoid maneuvering system;
FIG. 2 depicts a diagram including an example sense and avoid maneuvering system;
FIG. 3 depicts an example model constructed by an example modeling system;
FIG. 4 depicts a flow diagram of an example method according to example embodiments of the present disclosure;
FIG. 5 depicts a flow diagram of an example method according to example embodiments of the present disclosure; and
FIG. 6 depicts a computing system for implementing one or more aspects according to example embodiments of the present disclosure.

### DETAILED DESCRIPTION

Reference now will be made in detail to embodiments, one or more examples of which are illustrated in the drawings. Each example is provided by way of explanation of the embodiments, not limitation of the embodiments. In fact, it will be apparent to those skilled in the art that various modifications and variations can be made in the present disclosure without departing from the scope or spirit of the invention. For instance, features illustrated or described as part of one embodiment can be used with another embodiment to yield a still further embodiment. Thus, it is intended that the present disclosure covers such modifications and variations as come within the scope of the appended claims and their equivalents.

As used in the specification and the appended claims, the singular forms "a," "an," and "the" include plural referents unless the context clearly dictates otherwise. The use of the term "about" in conjunction with a numerical value refers to within 25% of the stated amount.

Example aspects of the present disclosure are directed to methods and systems that can allow an unmanned aerial vehicle to navigate around obstacles. The unmanned aerial vehicle can use cooperative sensors and non-cooperative sensors to detect obstacles. Non-cooperative sensors can be used to detect all obstacles. For instance, a camera, radar, and/or a heat sensor can be used to detect any obstacles. A cooperative sensor can be used to detect cooperative obstacles. A cooperative obstacle can be an obstacle that can communicate with the unmanned aerial vehicle. For instance, a transponder can be used to detect other aircrafts with transponders.

Methods and systems according to example embodiments of the present disclosure can model paths for the detected obstacles. Using the modeled paths, the unmanned aerial vehicle can determined if its flight plan is going to come within a threshold distance of the modeled paths. For each modeled path that the unmanned aerial vehicle will come within the threshold distance, a determination can be made of if the unmanned aerial vehicle and the particular detected obstacle will be near each other within a threshold amount of time. If the unmanned aerial vehicle and the particular detected obstacle will be near each other within a threshold amount of time, then a collision can be predicted.

In particular implementations, once a collision is predicted, the unmanned aerial vehicle can determine if the obstacle is cooperative. If the obstacle is not cooperative, then the unmanned aerial vehicle can perform an avoidance maneuver. If the obstacle is cooperative, the unmanned aerial vehicle can determine whether to initiate communications with the obstacle. If a determination is made not to initiate communications with the obstacle, the unmanned aerial vehicle can perform an avoidance maneuver. If a determination is made to initiate communications with the obstacle, the unmanned aerial vehicle can negotiate with the obstacle. For instance, the unmanned aerial vehicle and the obstacle can communicate with one another to determine an alternate flight path for the unmanned aerial vehicle, the obstacle, or both to avoid collision. As one example, the unmanned aerial vehicle and the obstacle can both agree to turn slightly to their right. If the unmanned aerial vehicle performs an avoidance maneuver, the unmanned aerial vehicle can return to a planned course after performing the avoidance maneuver. In this way, the systems and methods according to example aspects of the present disclosure have a technical effect of enabling an unmanned aerial vehicle to sense and avoid obstacles that are not cooperative and communicate with obstacles that are cooperative.

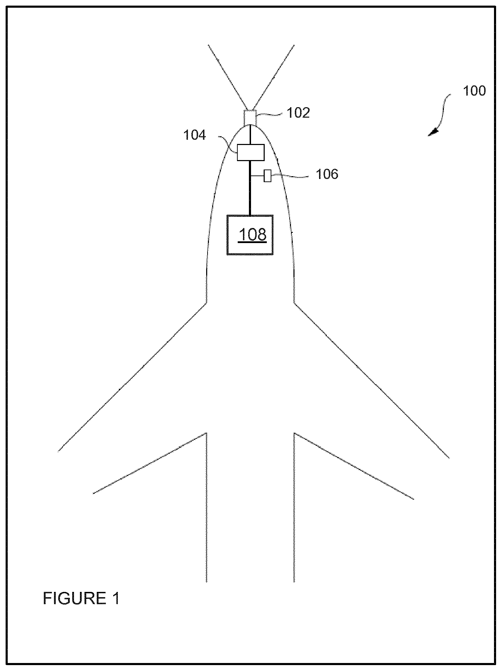

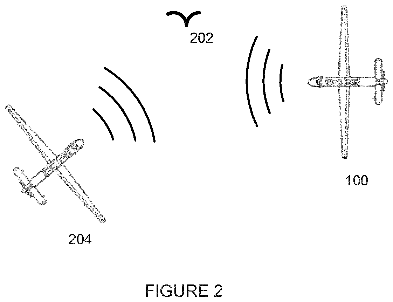

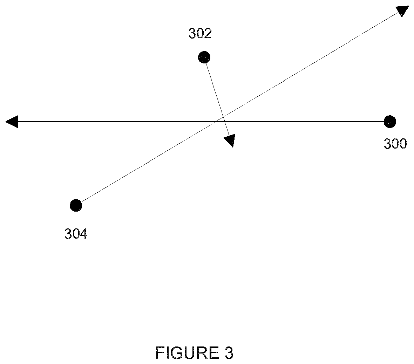

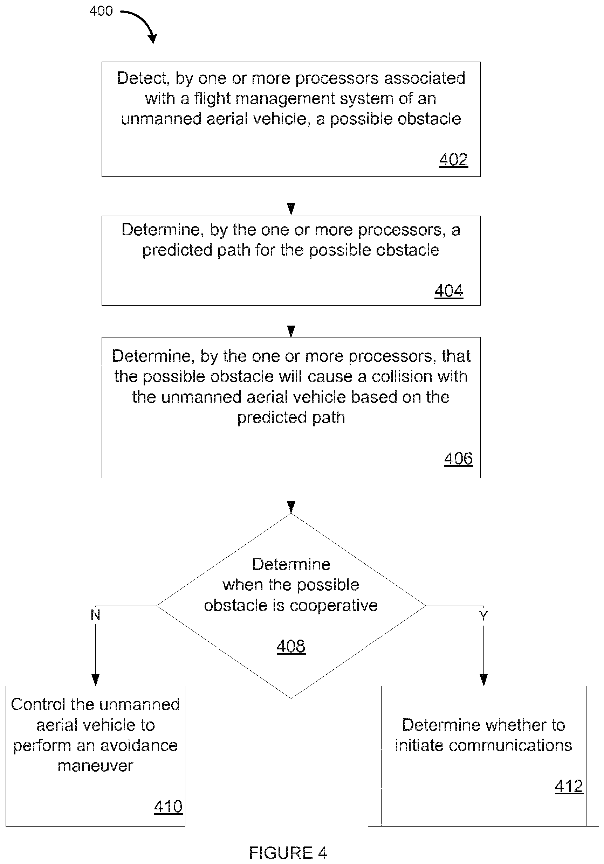

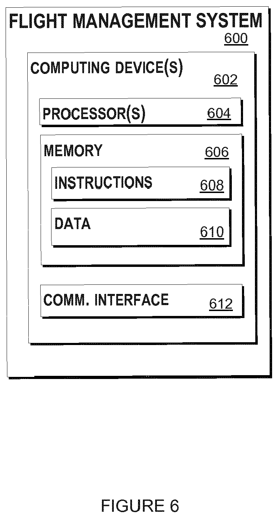

FIG. 1 is a vehicle 100 such as an aircraft in accordance with an embodiment of the present disclosure. The vehicle 100 includes one or more non-cooperative sensors 102, a flight management system (FMS) 104 for generating a flight path trajectory and flying vehicle 100 along the flight path trajectory, a maneuvering system 106, one or more cooperative sensors 108, and a plurality of other systems and subsystems that enable proper operation of vehicle 100. The one or more non-cooperative sensors 102 can include one or more optical sensors, one or more radars, one or more heat sensors, etc. The one or more cooperative sensors 108 can include one or more transponders. The one or more non-cooperative sensors 102 and the one or more cooperative sensors 108, described in more detail in reference to FIG. 2, can be in communication with a modeling system, described in more detail in reference to FIG. 3. The FMS 104 can include the modeling system or be in communication with the modeling system. The FMS 104 and/or the modeling system can include a seek and avoid system or be in communication with the seek and avoid system. The seek and avoid system will be described in more detail in reference to FIG. 4. The FMS 104, the modeling system, and/or the seek and avoid system can be stored in memory and executed by one or more computing device(s), as shown in FIG. 6.

The vehicle 100 can be an unmanned aerial vehicle. The FMS 104 can create a flight path for the vehicle 100 based on a destination and a current location. In an embodiment, the FMS 104 can work in conjunction with the maneuvering system 106 to cause the vehicle 100 to move. In one embodiment, the maneuvering system 106 can be in communication with one or more ailerons, a rudder, an elevator, an inverted V-tail assembly, one or more rotors, etc. For example, the maneuvering system 106 can alter an inverted V-tail assembly to cause the vehicle 100 to move along an x-axis, or roll-axis (e.g., roll clockwise, roll counterclockwise). In another embodiment, the maneuvering system 106 can cause one or more ailerons of one or more wing assemblies to deflect, resulting in the vehicle 100 rolling clockwise or counterclockwise. In another example, the maneuvering system 106 can alter an inverted V-tail assembly to cause the vehicle 100 to move along a y-axis, or yaw-axis (e.g., turn left, turn right). In another embodiment, the maneuvering system 106 can cause a rudder of a tail assembly to deflect, resulting in the vehicle 100 turning left or right. In yet another example, the maneuvering system 106 can alter an inverted V-tail assembly to cause the vehicle 100 to move along a z-axis, or pitch-axis (e.g., increase elevation or decrease elevation). In another embodiment, the maneuvering system 106 can cause an elevator of a tail assembly to deflect, resulting in the vehicle 100 increasing elevation or decreasing elevation. In other embodiments, the maneuvering system 106can cause the vehicle 100 to move along the roll-axis, the yaw-axis, and/or the pitch axis by causing rotors to change angles and/or output.

A cooperative obstacle can be an obstacle that can communicate with the vehicle 100. A cooperative sensor 108 can be any device or source of information which can detect whether an obstacle can communicate. In one embodiment, a cooperative sensor 108 can be a sensor from which communication with a cooperative obstacle can be received and/or transmitted. The one or more cooperative sensors 108 can include and/or be in communication with one or more computing device(s), as shown in FIG. 6. The one or more computing device(s) can execute communication instructions stored in memory. The communication instructions can interrupt communications received via the one or more cooperative sensors 108 and/or construct communications transmitted via the one or more cooperative sensors 108.

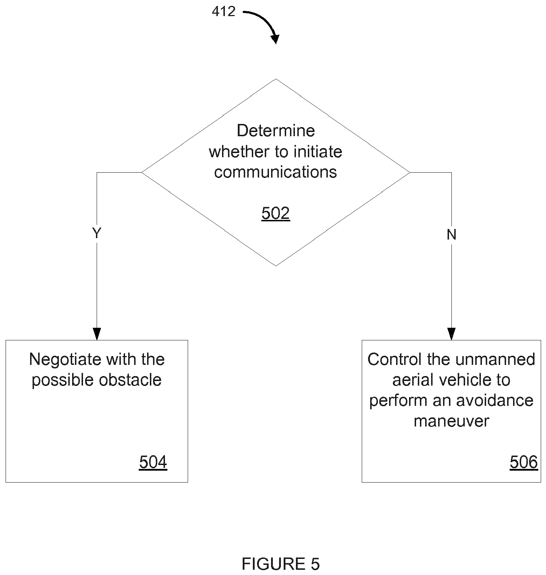

Communication with a cooperative obstacle via the one or more cooperative sensors 108 will be described in more detail in reference to FIG. 5.

The numbers, locations, and/or orientations of the components of example vehicle 100 are for purposes of illustration and discussion and are not intended to be limiting. Those of ordinary skill in the art, using the disclosures provided herein, shall understand that the numbers, locations, and/or orientations of the components of the vehicle 100 can be adjusted without deviating from the scope of the present disclosure.

FIG. 2 depicts a diagram including an example sense and avoid maneuvering system. The vehicle 100 can detect a possible obstacle, such as non-cooperative obstacle 202 and/or cooperative obstacle 204, using a non-cooperative sensor. Examples of non-cooperative sensors include radar, heat sensors, and optical sensors. The non-cooperative obstacle 202 can be any obstacle capable of being detected by the one or more non-cooperative sensors, such as a bird, a weather balloon, an unmanned aerial vehicle, etc. A cooperative sensor can be, for example, a transponder. The vehicle 100 can detect a cooperative possible obstacle 204 using a cooperative sensor. The cooperative obstacle 204 can be any obstacle capable of being detected by the one or more cooperative sensors, such as another unmanned aerial vehicle with a transponder.

The sensors can determine a position, velocity, and/or acceleration of an obstacle at a number of times. Each position can include three coordinates. Each velocity can include three vectors. Each acceleration can include three vectors. A cooperative sensor can allow the vehicle to communicate with the cooperative obstacle 204. The cooperative sensor can allow one-way communication to the cooperative obstacle 204. The cooperative sensor can allow one-way communication from the cooperative obstacle 204. The cooperative sensor can allow two-way communication between the cooperative obstacle 204. The cooperative sensor can receive current and/or anticipated flight information, such as flight path, position, velocity, acceleration, etc. from the cooperative obstacle 204. Some information, such as the velocity and the acceleration, for example, can include multiple (e.g., three) vectors. Information obtained from the sensors can be used by the modeling system to model flight paths and predict collisions.

FIG. 3 depicts an example model constructed by an example modeling system. In an aspect, the modeling system can construct a 3-D model and use the information obtained by the sensors to construct predicted flight paths of the possible obstacles 302, 304 within the 3-D model. The flight path of the vehicle 300 can also be constructed in the 3-D model. Possible obstacles having a flight path within a threshold distance of the flight path of the vehicle 100 can be flagged as a possible collision. In another aspect, possible collisions are flagged when the vehicle 100 and a possible obstacle are determined to be within a threshold distance of each other and within a threshold time. For example, if the flight path of the vehicle 300 and a flight path of a possible obstacle 302 are projected to intersect, but the vehicle 100 is projected to pass through the intersection point 10 seconds before the possible obstacle, then there may be no collision risk. However, if the flight path of the vehicle 300 and a flight path of a possible obstacle 304 are projected to intersect, and the vehicle 100 is projected to pass through the intersection point within some threshold amount of time, such as 2 seconds before the possible obstacle, then there can be a possible collision.

In an aspect, the modeling system can construct a 2-D model on a plane on which the flight path of the vehicle 300 is projected. For example, if the vehicle 100 is going to maintain a certain altitude for a predetermined time, then the 2-D model can disregard information about possible obstacles that is not within a threshold distance of the altitude. The 2-D model can consider portions of the flight paths of the possible obstacles that are within the threshold distance of the altitude. Although in the example given the vehicle 100 has no change in altitude, a 2-D model can be constructed for a vehicle 100 with a change in altitude. Any flight path that has a constant slope in the x-direction, y-direction, and/or z-direction can use a plane to construct a 2-D model. As with the 3-D model, the 2-D model can also flag possible collisions based on the predicted flight paths of the possible obstacles 302, 304 coming within a threshold distance of the flight path of the vehicle 300. Also as with the 3-D model, the 2-D model can flag possible collisions based on the predicted flight paths of the possible obstacles 302, 304 coming within a threshold distance of the flight path of the vehicle 300 within a threshold time.

FIG. 4 depicts a flow diagram of an example method (400) for navigating an unmanned aerial vehicle according to example embodiments of the present disclosure. At (402), a possible obstacle can be detected. The possible obstacle can be detected via one or more cooperative sensors. The possible obstacle can be detected via one or more non-cooperative sensors.

At (404), a predicted path for the possible obstacle can be determined. The modeling system can determine the predicted path for the possible obstacle using a 3-D model. The modeling system can determine the predicted path for the possible obstacle using a 2-D model. At (406) a determination can be made that the possible obstacle will cause a collision with the unmanned aerial vehicle based on the predicted path. Determining that the possible obstacle will cause a collision with the unmanned aerial vehicle based on the predicted path can include determining that the unmanned aerial vehicle will be within a threshold distance of the possible obstacle within a threshold time.

At (408), a determination of when the possible obstacle is cooperative can be made. Determining when the possible obstacle is cooperative can include determining if communication with the possible obstacle is possible. Determining when the possible obstacle is cooperative can include determining if the possible obstacle was detected via the one or more cooperative sensors. Determining when the possible obstacle is cooperative can include determining if the possible obstacle was detected via a transponder.

When the possible obstacle is not cooperative, the method (400) can proceed to (410) and control the unmanned aerial vehicle to perform an avoidance maneuver. An avoidance maneuver can include a change in one or more of yaw, pitch, and roll. For example, if the possible obstacle is projected to hit the unmanned aerial vehicle on the right wing, the unmanned aerial vehicle can roll clockwise or counterclockwise, turn left, and/or increase or decrease elevation.

When the possible obstacle is cooperative, the method (400) can proceed to (412) and a determination can be made of whether to initiate communications with the possible obstacle. FIG. 5 depicts a flow diagram of an example method for implementing (412) for determining whether to initiate communications according to example embodiments of the present disclosure. At (502), determination can be made of whether to initiate communications with the possible obstacle. When a determination to initiate communications with the possible obstacle is made, the unmanned aerial vehicle can initiate communications with the possible obstacle. When a determination to initiate communications with the possible obstacle is made, the method for implementing (412) can move to (504) and the unmanned aerial vehicle can negotiate with the possible obstacle. When a determination not to initiate communication with the unmanned aerial vehicle is made, the method for implementing (412) can move to (506) and the unmanned aerial vehicle can control the unmanned vehicle to perform an avoidance maneuver. Negotiating with the possible obstacle can include determining that the unmanned aerial vehicle has a right of way. Negotiating with the possible obstacle can include determining that the possible obstacle will yield to the unmanned aerial vehicle. Negotiating with the possible obstacle can include controlling the unmanned aerial vehicle to maintain a current course. Negotiating with the possible obstacle can include causing the possible obstacle to alter a course. For example, negotiating with the possible obstacle can include sending a communication to the possible obstacle, wherein the communication causes the possible obstacle to change course. Optionally, negotiating with the possible obstacle can include controlling the unmanned aerial vehicle to perform an avoidance maneuver. The unmanned aerial vehicle can return to a planned course after the performed avoidance maneuver. The communication can include a one-way communication to the possible obstacle. For example, the unmanned aerial vehicle can transmit instructions to the possible obstacle, such as instructions for the possible obstacle to alter course. The unmanned aerial vehicle can confirm that the possible obstacle received and is following the instruction via observation of the possible obstacle via the one or more non-cooperative sensors. The communication can include a one-way communication from the possible obstacle. For example, the unmanned aerial vehicle can receive a communication from the possible obstacle, wherein the communication can indicate that the possible obstacle has a flight path that will avoid the unmanned aerial vehicle. The communication can include a two-way communication between the unmanned vehicle and the possible obstacle. For example, the unmanned aerial vehicle can transmit its flight path to the possible obstacle and/or receive a flight path for the possible obstacle. The unmanned aerial vehicle can alter its flight path in light of the flight path for the possible obstacle. The unmanned aerial vehicle can transmit instructions for the possible obstacle to alter course and its altered flight path to the possible obstacle. The unmanned aerial vehicle can receive a communication from the possible obstacle confirming that the possible obstacle will alter the flight path in accordance with the transmitted instructions.

FIG. 6 depicts a block diagram of an example computing system that can be used to implement the flight management system 600 or other systems of the aircraft according to example embodiments of the present disclosure. As shown, the flight management system 600 can include one or more computing device(s) 602. The one or more computing device(s) 602 can include one or more processor(s) 604 and one or more memory device(s) 606. The one or more processor(s) 604 can include any suitable processing device, such as a microprocessor, microcontroller, integrated circuit, logic device, or other suitable processing device. The one or more memory device(s) 606 can include one or more computer-readable media, including, but not limited to, non-transitory computer-readable media, RAM, ROM, hard drives, flash drives, or other memory devices.

The one or more memory device(s) 606 can store information accessible by the one or more processor(s) 604, including computer-readable instructions 608 that can be executed by the one or more processor(s) 604. The instructions 608 can be any set of instructions that when executed by the one or more processor(s) 604, cause the one or more processor(s) 604 to perform operations. The instructions 608 can be software written in any suitable programming language or can be implemented in hardware. In some embodiments, the instructions 608 can be executed by the one or more processor(s) 604 to cause the one or more processor(s) 604 to perform operations, such as the operations for navigating an unmanned aerial vehicle, as described with reference to FIG. 4, and/or any other operations or functions of the one or more computing device(s) 602.

The memory device(s) 606 can further store data 610 that can be accessed by the processors 604. For example, the data 610 can include a navigational database, data associated with the navigation system(s), data associated with the control mechanisms, data indicative of a flight plan associated with the vehicle 100, data associated with cooperative sensors, non-cooperative sensors, and/or any other data associated with vehicle 100, as described herein. The data 610 can include one or more table(s), function(s), algorithm(s), model(s), equation(s), etc. for navigating the vehicle 100 according to example embodiments of the present disclosure.

The one or more computing device(s) 602 can also include a communication interface 612 used to communicate, for example, with the other components of system. The communication interface 612 can include any suitable components for interfacing with one or more network(s), including for example, transmitters, receivers, ports, controllers, antennas, or other suitable components.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A method for navigating an unmanned aerial vehicle comprising:
   detecting, by one or more processors associated with a flight management system of an unmanned aerial vehicle, a possible obstacle;
   determining, by the one or more processors, a predicted path for the possible obstacle;
   determining, by the one or more processors, that the possible obstacle will cause a collision with the unmanned aerial vehicle based on the predicted path;
   determining, by the one or more processors, when the possible obstacle is cooperative;
   when the possible obstacle is not cooperative, controlling the unmanned aerial vehicle to perform an avoidance maneuver; and
   when the possible obstacle is cooperative, determining whether to initiate communications with the possible obstacle.
2. The method of clause 1, further comprising:
   when a determination to initiate communications with the possible obstacle is made, negotiating with the possible obstacle.
3. The method of any preceding clause, wherein negotiating with the possible obstacle comprises:
   determining that the unmanned aerial vehicle has a right of way; and
   controlling the unmanned aerial vehicle to maintain a current course.
4. The method of any preceding clause, wherein negotiating with the possible obstacle comprises:
   determining that the possible obstacle will yield to the unmanned aerial vehicle; and
   controlling the unmanned aerial vehicle to maintain a current course.
5. The method of any preceding clause, wherein negotiating with the possible obstacle comprises sending a communication to the possible obstacle, wherein the communication causes the possible obstacle to change course.
6. The method of any preceding clause, wherein in response to negotiating with the possible obstacle the method comprises performing an avoidance maneuver.
7. The method of any preceding clause, further comprising returning to a planned course after performing the avoidance maneuver.
8. The method of any preceding clause, wherein determining when the possible obstacle is cooperative comprises determining whether communication with the possible obstacle is possible.
9. The method of any preceding clause, wherein the communication comprises communication via one or more transponders.
10. A flight management system for navigating an unmanned aerial vehicle, the system comprising one or more processors and one or more memory devices included with the unmanned aerial vehicle, the one or more memory devices storing instructions that when executed by the one or more processors cause the one or more processors to perform operations, the operations comprising:
   detecting a possible obstacle;
   determining a predicted path for the possible obstacle;
   determining that the possible obstacle will cause a collision with the unmanned aerial vehicle based on the predicted path;
   when the possible obstacle is not detected via a one or more cooperative sensors, controlling the unmanned aerial vehicle to perform an avoidance maneuver; and
   when the possible obstacle is detected via the one or more cooperative sensors, determining whether to initiate communications with the possible obstacle.
11. The flight management system of any preceding clause, further comprising:
   when a determination to initiate communications with the possible obstacle is made, negotiating with the possible obstacle.
12. The flight management system of any preceding clause, wherein negotiating with the possible obstacle comprises:
   determining that the unmanned aerial vehicle has a right of way; and
   controlling the unmanned aerial vehicle to maintain a current course.
13. The flight management system of any preceding clause, wherein negotiating with the possible obstacle comprises:
   determining that the possible obstacle will yield to the unmanned aerial vehicle; and
   controlling the unmanned aerial vehicle to maintain a current course.
14. The flight management system of any preceding clause, wherein negotiating with the possible obstacle comprises causing the possible obstacle to alter a course.
15. The flight management system of any preceding clause, wherein in response to negotiating with the possible obstacle the operations further comprise performing an avoidance maneuver.
16. The flight management system of any preceding clause, wherein the operations further comprise returning to a planned course after the performed avoidance maneuver.
17. The flight management system of any preceding clause, wherein the one or more cooperative sensors comprise at least one transponder.
18. An unmanned aerial vehicle comprising:
   one or more cooperative sensors;
   one or more non-cooperative sensors;
   a computing system comprising one or more processors and one or more memory devices located on the unmanned aerial vehicle, the one or more memory devices storing instructions that when executed by the one or more processors cause the one or more processors to perform operations comprising:
      detecting a possible obstacle;
      determining a predicted path for the possible obstacle;
      determining that the possible obstacle will cause a collision with the unmanned aerial vehicle based on the predicted path;
      when the possible obstacle is not detected via the one or more cooperative sensors, controlling the unmanned aerial vehicle to perform an avoidance maneuver; and
      when the possible obstacle is detected via the one or more cooperative sensors, initiating communications with the possible obstacle.
19. The unmanned aerial vehicle of any preceding clause, wherein the communications comprise one-way communications.
20. The unmanned aerial vehicle of any preceding clause, wherein the communications comprise two-way communications.

## Claims

1. A method (400) for navigating an unmanned aerial vehicle (100) comprising:
detecting, by one or more processors (604) associated with a flight management system (104, 600) of an unmanned aerial vehicle (100), a possible obstacle;
determining, by the one or more processors (604), a predicted path for the possible obstacle;
determining, by the one or more processors (604), that the possible obstacle will cause a collision with the unmanned aerial vehicle (100) based on the predicted path;
determining, by the one or more processors (604), when the possible obstacle is cooperative;
when the possible obstacle is not cooperative, controlling the unmanned aerial vehicle (100) to perform an avoidance maneuver; and
when the possible obstacle is cooperative, determining whether to initiate communications with the possible obstacle.

2. The method (400) of claim 1, further comprising:
when a determination to initiate communications with the possible obstacle is made, negotiating with the possible obstacle.

3. The method (400) of claim 2, wherein negotiating with the possible obstacle comprises:
determining that the unmanned aerial vehicle (100) has a right of way; and
controlling the unmanned aerial vehicle (100) to maintain a current course.

4. The method (400) of either of claim 2 or 3, wherein negotiating with the possible obstacle comprises:
determining that the possible obstacle will yield to the unmanned aerial vehicle (100); and
controlling the unmanned aerial vehicle (100) to maintain a current course.

5. The method (400) of any of claims 2 to 4, wherein negotiating with the possible obstacle comprises sending a communication to the possible obstacle, wherein the communication causes the possible obstacle to change course.

6. The method (400) of claim 5, wherein in response to negotiating with the possible obstacle the method comprises performing an avoidance maneuver.

7. The method (400) of claim 6, further comprising returning to a planned course after performing the avoidance maneuver.

8. The method (400) of any of claims 1-7, wherein determining when the possible obstacle is cooperative comprises determining whether communication with the possible obstacle is possible.

9. The method (400) of claim 8, wherein the communication comprises communication via one or more transponders.

10. A flight management system (104, 600) for navigating an unmanned aerial vehicle (100), the system comprising one or more processors (604) and one or more memory devices (606) included with the unmanned aerial vehicle (100), the one or more memory devices (606) storing instructions (608) that when executed by the one or more processors (604) cause the one or more processors (604) to perform operations, the operations comprising:
detecting a possible obstacle;
determining a predicted path for the possible obstacle;
determining that the possible obstacle will cause a collision with the unmanned aerial vehicle (100) based on the predicted path;
when the possible obstacle is not detected via a one or more cooperative sensors (108), controlling the unmanned aerial vehicle (100) to perform an avoidance maneuver; and
when the possible obstacle is detected via the one or more cooperative sensors (108), determining whether to initiate communications with the possible obstacle.

11. The flight management system (104, 600) of claim 10, further comprising:
when a determination to initiate communications with the possible obstacle is made, negotiating with the possible obstacle.

12. The flight management system (104, 600) of claim 11, wherein negotiating with the possible obstacle comprises:
determining that the unmanned aerial vehicle (100) has a right of way; and
controlling the unmanned aerial vehicle (100) to maintain a current course.

13. The flight management system (104, 600) of either of claim 11 or 12, wherein negotiating with the possible obstacle comprises:
determining that the possible obstacle will yield to the unmanned aerial vehicle (100); and
controlling the unmanned aerial vehicle (100) to maintain a current course.

14. The flight management system (104, 600) of any of claims 11 to 13, wherein negotiating with the possible obstacle comprises causing the possible obstacle to alter a course.

15. The flight management system (104, 600) of claim 14, wherein in response to negotiating with the possible obstacle the operations further comprise performing an avoidance maneuver.
